# EUROPEAN PATENT APPLICATION

(11) **EP 4 574 243 A1**
(43) Date of publication of application: **25.06.2025**
(21) Application number: 23218490.3
(22) Date of filing: 20.12.2023
(51) Int. Cl.: B01D 53/62, C01B 32/963

(54) **PROCESS FOR CAPTURING CARBON FROM GASEOUS CO2 AND STORING THE CAPTURED CARBON IN SOLID FORM**

(71) Applicant: Polestar Performance AB, 405 31 Gothenburg (SE)
(72) Inventor: PEHRSON, Hans, 423 39 Torslanda (SE); REHNLUND MAIBACH, David, 422 49 Göteborg (SE)
(74) Representative: Zacco Sweden AB

(57) **Abstract**

Process for capturing carbon from gaseous CO₂ (2) and storing the captured carbon in solid form (4a). The process comprises: providing (100) silicon (5a, 5b, 5c) in a container (6), wherein a temperature of the silicon is or is adjusted to at least 1000 °C; providing (200) a gas in the container such that a gas pressure of at least 101.335 kPa is created in the container, wherein the gas in the container comprises at least 1 vol. % CO₂ (2), and wherein a mole fraction of CO₂ in the gas is greater than a mole fraction of O₂ in the gas, allowing the CO₂ (2) to react with the silicon (5a, 5b, 5c) in the container, thereby forming solid silicon carbide (4a).

## Description

### TECHNICAL FIELD

The present disclosure relates to a process for capturing carbon from gaseous CO₂ and storing the captured carbon in solid form.

### BACKGROUND ART

When producing lime from natural limestone, which consists of calcium carbonate and has the chemical formula CaCO₃, a large amount of greenhouse gases, CO₂, are emitted. Lime is used in many different areas, such as in producing cement, steel, aluminum, plastics, agriculture, paper and for pH-adjustments of lakes, etc. Wellfunctioning solutions for taking care of the CO₂ emissions when producing lime are missing except for Carbon Capture and Storage, CCS, technology.

The most discussed solution today is to capture the CO₂ at the production site for later transport from the site for carbon capture and utilization (CCU) or carbon capture and storage (CCS). The captured CO₂ is then often planned to be stored in deep underground geological formations, carbonizing minerals in the ground. This process takes considerable time. Captured CO₂ may be converted to fuels such as methanol/ethanol.

CCS and CCU are technologies that aim to reduce greenhouse gas emissions. CCS processes, however, require high CO₂ storage capacity and the costs are high, and most novel CCU technologies are not yet commercialized and might yet release GHG emissions.

Therefore, there is a need for alternative ways of taking care of CO₂ emissions from industries such as lime production.

### SUMMARY OF THE INVENTION

It is an object of the present disclosure to provide a process for capturing carbon from gaseous carbon dioxide, CO₂, and storing the captured carbon in solid form.

The invention is defined by the appended independent patent claims. Non-limiting embodiments emerge from the dependent claims, the appended drawings, and the following description.

According to a first aspect there is provided a process for capturing carbon from gaseous CO₂ and storing the captured carbon in solid form, the process comprising: providing silicon in a container, wherein a temperature of the silicon is or is adjusted to at least 1000 °C; providing a gas in the container such that a gas pressure of at least 101.335 kPa is created in the container, wherein the gas in the container comprises at least 1 vol. % CO₂, and wherein a mole fraction of CO₂ in the gas is greater than a mole fraction of O₂ in the gas, and allowing CO₂ to react with the silicon in the container, thereby forming solid silicon carbide .

The reaction that takes place in the container can be written:

CO₂ (g) + 2Si -> SiC (s) + SiO₂ (s) (1)

By this process silicon can be used as a carbon-capture and carbon-storage material. Silicon can store carbon in solid form, silicon carbide (SiC) by reacting with carbon dioxide (CO₂). Under the conditions discussed above, CO₂ reacts with silicon to break the C-O bond and store both elements (i.e. C and O, respectively) in a solid silicon-based material (i.e. SiC (silicon carbide) and possibly also SiO₂ (silicon dioxide)).

The temperature of the silicon provided in the container may need to be adjusted/increased to at least 1000 °C before the reaction with CO₂ can start. Alternatively, the temperature of the silicon in/entered into the container is already at least 1000 °C, at which temperature the reaction with CO₂ can take place. For the reaction to continue as long as there are reactants (silicon and CO₂) present in or entered into the container, the temperature of the silicon in/entered into the container might need to be controlled to be kept at a steady temperature level of at least 1000 °C.

The gas, or at least the CO₂-component of the gas, might be entered continuously or as a pulsed flow into the container, maintaining the gas pressure of at least 101.335 kPa in the container (or differently described, creating an overpressure in the container as compared to ambient atmospheric pressure of at least 0.1 mbar (10 Pa)), maintaining at least 1 vol. % CO₂ in the gas and maintaining the mole fraction of CO₂ to O₂ in the gas in the container. In yet an alternative, the gas is entered into the container to form a gas pressure of at least 101.335 kPa in the container as a single supply, the gas having at least 1 vol. % CO₂ and a mole fraction of CO₂ that is larger than a mole fraction of O₂ in the gas at the onset of the reaction of CO₂ with the silicon in the container.

The silicon might be entered continuously, as a single batch or as a pulsed flow into the container. The process may be run until all or most of the silicon in the container has been turned into silicon carbide and possibly also silicon dioxide. Alternatively, the process may be stopped after a certain time or be run until there is too little CO₂ (i.e less than 1 vol.%) in the gas for the reaction to take place.

The order of the steps described for the process above at start-up of the process could be: a) provide silicon in a container having a temperature of at least 1000 °C/providing silicon in a container and adjusting the temperature of the silicon in the container to at least 1000 °C; b) provide the CO₂-containing gas into the container, and c) allow CO₂ to react with the silicon in the container, thereby forming solid silicon carbide. Once there is enough CO₂ in the container and the pressure is high enough, the reaction starts, i.e. is allowed to start. The order of the process steps at the start-up of the process could, however, be different. For example, the CO₂-containing gas could be entered into the container first. Thereafter, the silicon could be provided in the container, wherein the silicon could be entered into the container pre-heated to a temperature of at least 1000 °C, or the temperature of the silicon could be adjusted in the container to at least 1000 °C. The CO₂ starts to react with the silicon in the container when the temperature of the silicon is warm enough, thereby forming solid silicon carbide.

Utilising the above described process, CO₂ produced in traditional lime, CaO, producing industry can be captured and stored in solid form. The thus formed SiC could be used in the silicon carbide industry. The thus formed SiO₂ is a synthetic quartz having properties that might differ to natural quartz.

The mole fraction of CO₂ in the gas should be greater than the mole fraction of oxygen, O₂, in the gas. Thereby, the amount of SiO₂ formed is limited and the amount of SiC formed is maximized. In some embodiments the amount of O₂ is as low as down to 0.05 vol.% (when the gas is saturated with CO₂ or CO₂/inert gas).

In the container is created a gas overpressure, which is higher than the normal atmospheric/ambient pressure outside the container, i.e. higher than 101.325 kPa.

The gas pressure created in the container may be at least 101.335 kPa (0.1 mbar overpressure), or at least 101.375 kPa (0.5 mbar overpressure), or at least 101.45 kPa (1 mbar overpressure), or at least 101.825 kPa (5 mbar overpressure), or at least 111.325 kPa (0.1 bar overpressure), or at least 201.325 kPa (1 bar overpressure), or at least 601.325 kPa (5 bar overpressure), or at least 801.325 kPa (7 bar overpressure), or at least 1101.325 kPa (10 bar overpressure). Generally, the higher the pressure in the container, the better. The pressure is preferably gas pressure that is industrially feasible.

The gas provided in the container may comprise 1-100 vol.% CO₂.

The gas may comprise at least 1 vol.%, 5 vol.%, 10 vol.%, 20 vol.%, 30 vol.%, 40 vol.%, 50 vol.%, 60 vol.%, 70 vol.%, 80 vol.%, 90 vol.%, 95 vol.%, 99 vol.%, 99.5 vol.%, or 1-100 vol.%, 5-100 vol.%, 10-100 vol.% CO₂, 20-100 vol.%, 30-100 vol.%, 40-100 vol.%, 50-100 vol.%, 60-100 vol.%, 70-100 vol.%, 80-100 vol.%, 90-100 vol.%, or 95-100 vol.% CO₂. The rest being inert gas, such as argon, possibly O₂ (the mole fraction of CO₂ in the gas should be greater than the mole fraction of O₂ in the gas) and other gas impurities. 100 vol.% CO₂ may in reality be 99.99 vol.% CO₂.

The gas provided in the container may comprise an inert gas.

The inert gas may comprise of consist of e.g. Ar. Preferably, the gas comprises mainly CO₂ and the inert gas.

In one example the gas in the container comprises 15 vol.% CO₂, 1 vol.% O₂ and 84 vol. % Ar.

The silicon may be solid state silicon.

The solid state silicon may be provided as particles having a size of 20 µm or less.

The solid state silicon may be in particles having a size of 1 nm to 20 µm, or 1 nm to 10 µm, or 1 nm to 1 µm, or 1 nm to 500 nm, or 1 nm to 100 nm, or 1 nm to 50 nm, 50 nm to 20 µm, 100 nm to 20 µm, or 500 nm to 20 µm, or 1 µm to 20 µm.

The temperature of the solid state silicon may be or may be adjusted to at least 1200 °C.

Alternatively, the silicon is liquid state silicon, wherein the temperature of the liquid state silicon may be or may be adjusted to at least 1400°C.

Preferably, the liquid state silicon/the melt silicon being formed at a temperature of at least 1400°C is entered/formed in the container and thereafter the CO₂-containing gas is entered into the container above the melt or directly into the melt (e.g. by bubbling the CO₂-containing gas into the melt).

The silicon provided in the container may have a purity of at least 45%.

Alternatively, the silicon is gaseous state silicon and the temperature of the gaseous state silicon is or is adjusted to at least 1100 °C.

The gas provided in the container may comprise at most 10 vol.% nitrogen gas (N₂).

A catalyst may be present in the container.

According to a second aspect there is provided a system configured for performing the process described above, the system comprising: a container arranged to receive silicon, at least one gas inlet arranged for transportation of CO₂ into the container, such that a gas pressure of at least 101.335 kPa is created in the container, and a heater arranged to adjust the temperature in the container.

The gas inlet may be for transportation of only CO2 into the container. Alternatively, the gas inlet may be for transporting also other possible components of the gas into the container, such as an inert gas. Alternatively, there may be another inlet into the container for non-CO₂ gas components.

### BRIEF DESCRIPTION OF THE DRAWINGS

Fig. 1 shows schematically a reaction between carbon dioxide and solid state silicon for production of silicon carbide.
Fig. 2 shows schematically a reaction between carbon dioxide and liquid state silicon for production of silicon carbide.
Fig. 3 shows schematically a reaction between carbon dioxide and gaseous state silicon for production of silicon carbide.
Fig. 4 shows X-ray diffraction analysis of a sample comprising a mixture of 5 mol% silicon and 95 mol% calcium carbonate (CaCO₃) heat treated at 1200 °C in 0:100 vol% CO₂:N₂ gas atmosphere. The products formed were: CaO (a), Ca(OH)₂ (b) and various forms of calcium silicides (c) (e.g. Ca2(SiO₄)).
Fig. 5 shows X-ray diffraction analysis of a sample comprising a mixture of 5 mol% silicon and 95 mol% calcium carbonate (CaCO₃) heat treated at 1200 °C in 15:85 vol% CO₂:N₂ gas atmosphere. The products formed were: CaO (a), SiO₂, (d) various forms of calcium silicides (c) (e.g. CaSiO₃) and unreacted Si (e).
Fig. 6 shows X-ray diffraction analysis of a sample comprising a mixture of 0.25 mol% silicon and 99.75 mol% calcium carbonate (CaCO₃) heat treated at 1400 °C in 90:10 vol% CO₂:N₂ gas atmosphere. The products formed were: CaSiO₄, CaSiOs (c) and CaO (a) (lime).
Fig. 7 shows X-ray diffraction analysis of a sample comprising a mixture of 5 mol% silicon and 95 mol% calcium carbonate (CaCO₃) heat treated at 1400 °C in 90:10 vol% CO₂:N₂ gas atmosphere. The products were; SiO₂ (d) CaSiOs (c) and unreacted Si (e).
Fig. 8 shows X-ray diffraction analysis of silicon particles of micro size heat treated at 1400 °C in 100 vol.% CO₂ gas atmosphere. The products were; SiO₂ (d) and unreacted Si (e).
Fig. 9 shows X-ray diffraction analysis of silicon particles of nanometer size heat treated at 1460 °C in 100 vol.% CO₂ gas atmosphere. The products were; SiO₂ (d), SiC (f) and unreacted Si (e).
Fig. 10 schematically shows the basics steps in a process of capturing carbon from gaseous CO₂ and storing the captured carbon in solid form.
Fig. 11 shows X-ray diffraction analysis of silicon particles of nanometer size heat treated at 1000, 1100 and 1200 °C in 100 vol.% CO₂ gas atmosphere. SiC peaks (f) were only observed at 1200 °C.
Fig. 12 shows X-ray diffraction analysis of silicon particles of nanometer size heat treated at 1200 °C in 100 vol.% CO₂ gas atmosphere for 1 hour and 12 hours, respectively. SiC peaks (f)) were observed for both time settings.
Fig. 13 shows X-ray diffraction analysis of silicon particles of nanometer size heat treated at 1200 °C in 100 vol.% CO₂ gas atmosphere (curve 1) and 30 vol.% CO₂ gas atmosphere (70 vol. % Ar) (curve 2). SiC peaks (f) were observed for both gas mixtures.
Fig. 14 shows X-ray diffraction analysis of silicon particles of nanometer size heat treated at 1200 °C in 10 vol.% CO₂ gas atmosphere (90 vol. % Ar). SiC peaks (f) were observed for this gas mixture.
Fig. 15 shows X-ray diffraction analysis of silicon particles of nanometer size heat treated at 1550 °C in 100 vol% CO₂ gas atmosphere. SiC peaks (f) were observed for the melted silicon sample after being exposed to the 100 vol% CO₂ gas atmosphere.
Fig. 16 shows a photo of silicon particles of nanometer size that have partially melted at 1550 °C. Melted silicon (X) and not-melted silicon (Y) samples were separated and the melted silicon sample was analysed by XRD (Figure 15).

### DETAILED DESCRIPTION

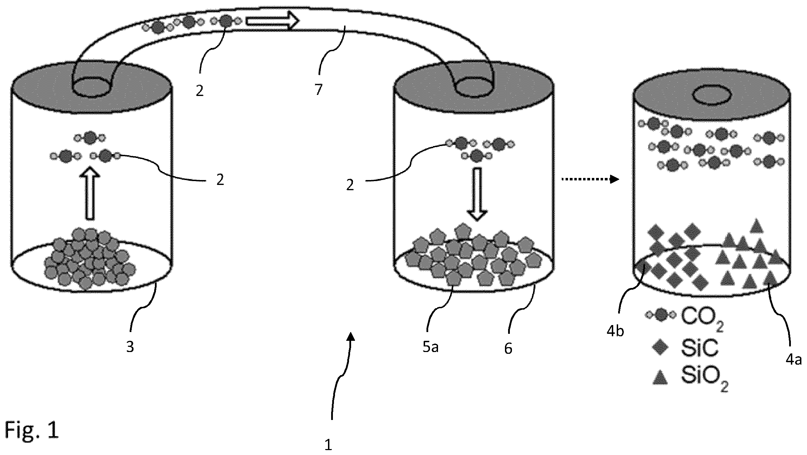

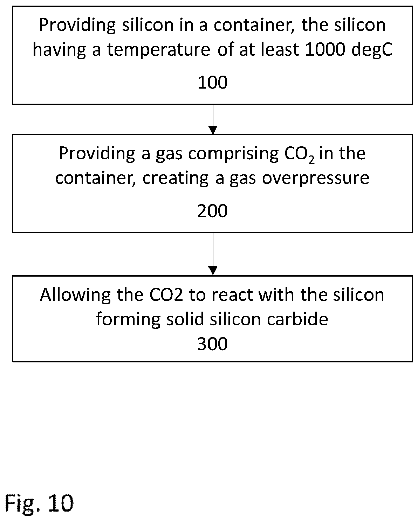

A process of capturing carbon from gaseous carbon dioxide 2 and storing the captured carbon in solid form 4a is illustrated in Fig. 10 and Figs 1-3. In Figs 1-3 is also illustrated a system 1 for capturing carbon from gaseous CO₂ and storing the captured carbon in solid form.

In a container 6, which may be a tube furnace, silicon 5a, 5b, 5c is provided 100. The container 6 may be a closed container. The container may be hermetically sealed, i.e. sealed in an airtight manner, preventing the passage of air, oxygen, or other gases into/out from the container 6.

A gas is provided 200 in the container 6, e.g. through an airtight passage, gas inlet 7. The gas is provided such that a gas pressure of at least 101.335 kPa is created in the container 6. The gas comprises at least 1 vol. % CO₂, and possibly an inert gas, such as argon, and a mole fraction of CO₂ in the gas is greater than a mole fraction of O₂ in the gas.

CO₂ in the gas is allowed to react with the silicon 5a, 5b, 5c in the container 6, thereby forming solid silicon carbide 4a and possibly also solid silicon dioxide 4b in the container 6. The reaction that takes place in the container can be written:

CO₂ (g) + 2Si -> SiC (s) + SiO₂ (s) (1)

The gas might be entered continuously or as a pulsed flow into the container 6, maintaining the gas pressure in the container and maintaining at least 1 vol. % CO₂ in the gas and maintaining a mole fraction of CO₂ in the gas being greater than a mole fraction of O₂ in the gas in the container 6. The process may be run until all or most of the silicon 5a, 5b, 5c in the container 6 has been turned into silicon carbide 4a and possibly also silicon dioxide 4b. Alternatively or in addition, silicon 5a, 5b, 5c may also be entered continuously or as a pulsed flow into the container 6, to provide for a continuous process. Alternatively, the process may be stopped after a certain time. In yet an alternative, the gas is entered into the container to form a gas pressure of at least 101.335 kPa in the container as a single supply. The reaction is allowed to continue for a specific time or until there is no more production of silicon carbide in the container.

The volumetric % (vol.%) of CO₂ in the gas is defined as the volume of the gas component divided by the total volume of the gas and any liquid in the container, multiplied by 100%. The formula for calculating volumetric % of a gas in a closed container is: Volumetric % = (Volume of Gas / Total Volume of Gas and Liquid) x 100%.

The gas provided in the container 6 may comprise at most 10 vol.% nitrogen gas (N₂). Such a low nitrogen gas content, less than 10 vol.%, or less than 5 vol.% or less than 1 vol.%, or less than 0.5 vol.%, may be needed to avoid formation of silicon nitride (SiN), which here is an unwanted reaction/product.

Before providing the gas in the container 6, the container might be purged with inert gas and/or CO₂ to remove unwanted oxygen from the container.

The CO₂ may be reacted with solid state silicon 5a, see Fig. 1. The solid state silicon may be provided as particles having a size of 20 µm or less. The silicon particles may be pre-treated to minimize the amount of silicon dioxide, SiO₂, on the particles.

In order to improve the reactivity of silicon in its solid state, the particles can be pre-treated before being entered into the container and exposed to the CO₂-containing gas. The oxide layer on the silicon particles may slow down or even hinder reaction between the underlying elemental silicon and CO₂ in the gas.

Two methods for achieving this are:
1) Mechanical polishing:
   The particles can be polished with an abrasive to mechanically remove the SiO₂. This step can be performed with e.g. a ball milling technique. It requires an inert atmosphere to avoid re-oxidation of silicon to silicon oxide. Possible inert atmospheres are CO₂ and argon.
2) Chemical treatment:
   The particles can be treated with an acidic chemical (e.g. hydrofluoric acid) to dissolve the surface oxide or by treatment with a reducing chemical (e.g. hydrogen gas (H₂)) that can reduce silicon oxides to elemental silicon. This would clean the surface partially or completely so that the particle surface is composed on elemental silicon (Si). The treatment would need to be performed under inert atmosphere to avoid re-oxidation of silicon to silicon oxide. Possible inert atmospheres are CO₂ and argon.

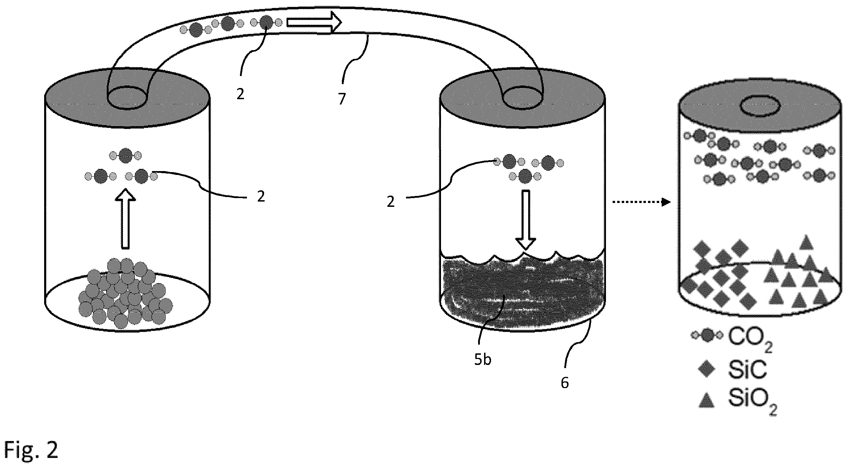

Alternatively, the CO₂ 2 may be reacted with liquid state silicon 5b, see Fig. 2.

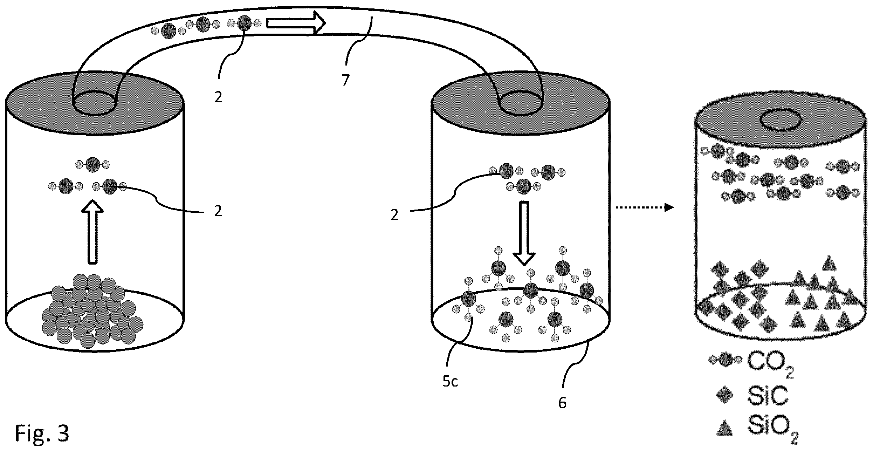

In yet an alternative, the CO₂ 2 may be reacted with gaseous state silicon 5c, see Fig.3.

The temperature in the container 6/temperature of the silicon in the container may need to be adjusted/increased 100 in order for CO₂ to react with the silicon 5a, 5b, 5c in the container. Alternatively, the temperature of the silicon in/entered into the container is already at a temperature at which the reaction takes place. For the reaction to continue as long as there are reactants (silicon and CO₂) present, the temperature in the container 6/of the silicon in the container might need to be controlled and/or be kept at a steady temperature level. For this purpose, a heater (not illustrated) may be arranged to adjust the temperature in the container 6.

The temperature of the solid state silicon 5a during reaction with CO₂ may be at least 1200 °C.

The temperature may be at least 1200 °C, or 1200-1500 °C, or 1300-1500 °C, or 1400-1500 °C, or 1200-1400 °C, or 1200-1300 °C. 1410 °C is the theoretical melting point of pure silicon. However, the melting temperature of silicon can vary depending on its composition and the process used to melt it. At the lower temperatures, the reaction might take longer time.

The temperature for forming liquid state silicon/melt silicon 5b may be at least 1400°C, or 1400-2000 °C, or 1400-1800 °C, or 1400-1600 °C, or 1600-2000 °C, or 1800-2000 °C, or 1600-1800 °C. The silicon may be melted in the container or may be entered into the container in melted form. Preferably, the liquid state silicon/the melt silicon is entered/formed in the container and thereafter the CO₂-containing gas is entered into the container above the melt or directly into the melt (e.g. by bubbling the CO₂-containing gas into the melt).

The silicon provided in the container may have a purity of at least 45%, or at least 60%, or 70%, or 80% or 90%, or 95%, or 97%, or at least 99% (rest are impurities such as Fe, Al, Ca, C etc). The purer the silicon, the lower the content of impurities. Silicon needed for the process may be produced from quartz (SiO₂) through a smelting process where carbon is added. Such a process, however, most likely results in CO₂ emissions, which counteracts the ambition to reduce overall CO₂ emission. Instead, an electrochemical synthesis can be used where O₂ can be separated from silicon in a salt solution at 500-850 °C using an electric current.

The temperature of the gaseous state silicon 5c is or is adjusted to at least 1100 °C, or 1100-1500°C, or 1200-1500°C, or 1300-1500°C, or 1100-1400°C, 1100-1300°C.

Gaseous state silicon can form gaseous compounds with other elements such as fluorine, chlorine, and phosphorus. The temperature at which it becomes gaseous depends on the specific compound it forms with other elements. For example, silicon reacts with gaseous sulfur at 600 °C and gaseous phosphorus at 1000 °C. Example of gaseous forms of silicon are silane, dichlorosilane, trichlorosilane, and silicon tetrachloride.

When a gaseous form of silicon 5c is used, the supply of silicon-based gas into the container 6 can be either a continuous or pulsed silicon gas flow. In both cases, an inert carrier gas may be needed to dilute the silicon gas. Argon is an example of a suitable inert gas.

The CO₂ may be reacted with the silicon 5a, 5b, 5c in the container for at least 10 minutes in order for silicon carbide to form. When the silicon is gaseous state silicon, a shorter reaction time may be needed for silicon carbide to form, such as a few seconds. In some embodiments the silicon is reacted with CO₂ for at least 1 hour, such as up to 12 hours, or until there is nothing or close to nothing left of one or both of the reactants, silicon or CO₂, in the container 6. A longer reaction time may result in more formation of silicon carbide as compared to a shorter reaction time.

A catalyst may be present in the container 6 to increase the speed of the reaction in the container. The catalyst may be SiC particles (primarily nanoparticles) which may function as seed crystals and catalyse the reaction of Si + CO₂ -> SiC. Noble metals, such as platinum, can be used as catalysts.

A catalyst may preferably be used when silicon in gaseous state is used. The catalyst can lower the energy barrier for the reaction between Si and C. One example of such catalyst is powder of SiC, which acts as a nucleation source.

In the container there might be arranged a mixing mechanism, such as a stirring mechanism, a rotary mechanism, or a bubble forming mechanism. Mixing may be used to increase the speed of the reaction of CO₂ and silicon in the container.

The process may comprise a pre-step of forming gaseous CO₂ through: a thermal treatment of calcium carbonate, thermal combustion of organic matter, microbial fermentation of organic matter, metal smelting, and/or capturing atmospheric CO₂.

Solid calcium carbonate, CaCO₃, can be heat treated at a temperature of up to 650 °C to form gaseous CO₂. Organic matter may be e.g. biowaste, and the combustion may take place e.g. in district heating power plants. Microbial fermentation may e.g. be production of bio-ethanol from wood. The metal smelting may be combustion of organic residues (e.g. recycling of Aluminium waste).

By the above described process, silicon 5a, 5b, 5c is used as a carbon-capture and carbon-storage material. Silicon stores carbon in solid form, silicon carbide 4a.

### EXPERIMENTAL

### Experiment 1

Calcium carbonate, CaCO₃, powder was mixed with silicon powder (<45 µm) to molar ratios: 0.25, 1 and 5 mol%. The powder mixture was pressed into a pellet (weight about 0.03 g) and heated to 900 °C and 1200 °C, respectively, in four types of atmospheres: 0:100 vol.%, 10:90 vol.%, 15:85 vol.% and 30:70 vol.% CO₂/N₂. The samples were annealed at the given temperature for 1 hour.

A tube furnace was flushed three times with the gas mixture before heat treatment was started. Continuous flow of the gas mixture was obtained during annealing by a mass flow controller with a flow rate of 100 ml/min.

X-ray diffraction analysis showed that no reaction between Si and CaCO₃ or CO₂ (released from CaCOs at temperatures between 690 - 940 °C, depending on gas mixture) occurs at 900 °C, for any of the samples. At 1200 °C, Si reacted with CaO (decomposition product of CaCOs at this temperature) to form silicates (CaSiO₃ e.g.). Silicon also reacted with oxygen to form silicon oxide (SiO₂) under these conditions (i.e. in contact with CaCO₃, above 1000 °C and in CO₂/N₂ gas environment). No traces of silicon carbide (SiC) were observed. It was, hence, concluded that low amounts of oxygen or an oxygen free environment is needed to avoid/limit SiO₂ formation. The tests also showed that SiN (silicon nitride) forms in nitrogen rich gas mixtures. To avoid SiN formation, a low amount of nitrogen or a nitrogen free gas environment is needed.

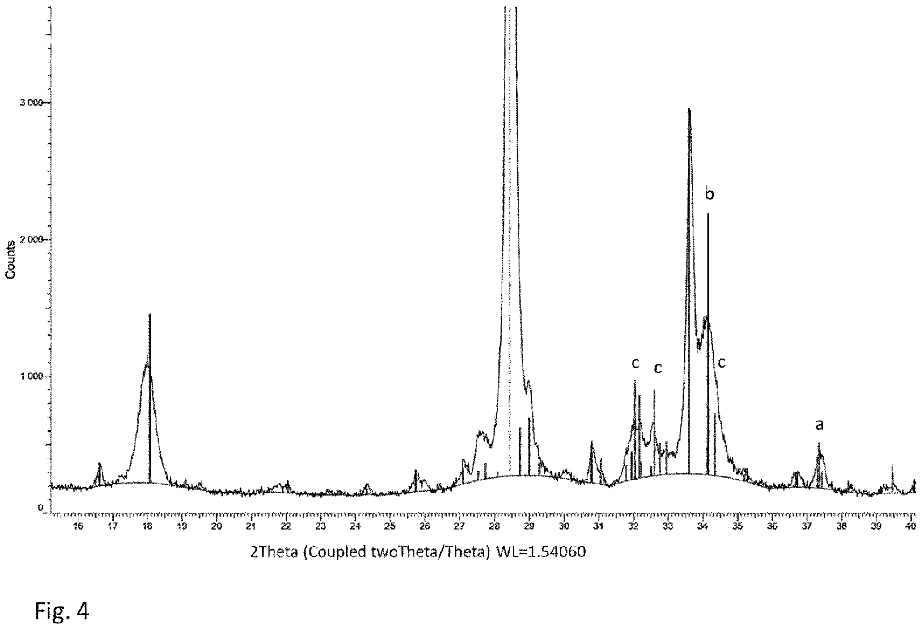

Fig. 4 shows X-ray diffraction analysis of sample comprising a mixture of 5 mol% silicon and 95 mol% calcium carbonate (CaCO₃) heat treated at 1200 °C in 0:100 vol% CO₂:N₂ gas atmosphere. The products formed were: CaO (a), Ca(OH)₂ (b) and various forms of calcium silicides (c) (e.g. CaSiOs). No SiC was detected.

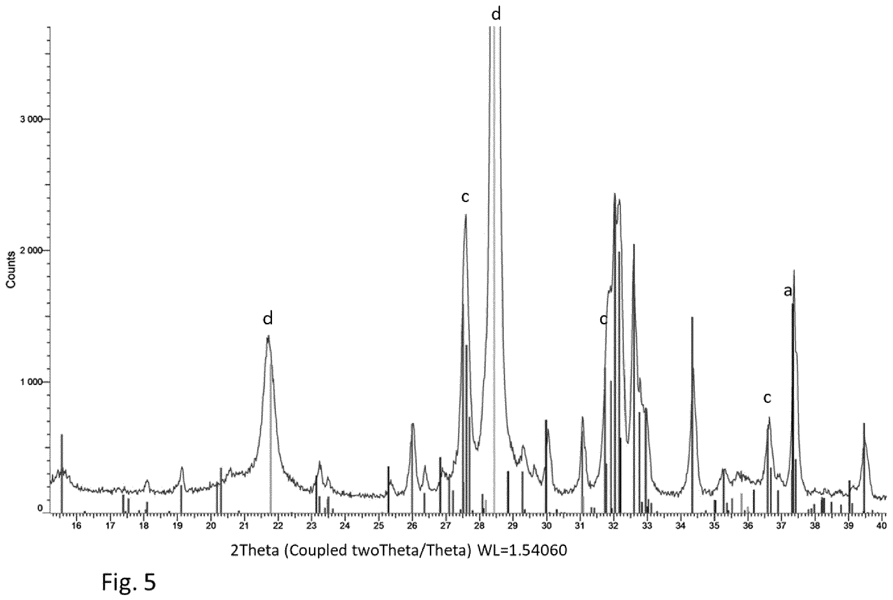

Fig. 5 shows X-ray diffraction analysis of sample comprising a mixture of 5 mol% silicon and 95 mol% calcium carbonate (CaCO₃) heat treated at 1200 °C in 15:85 vol% CO₂:N₂ gas atmosphere. The products formed were: CaO (a), SiO₂ (d) various forms of calcium silicides (c) (e.g. CaSiO₃) and unreacted Si (e). No SiC was detected.

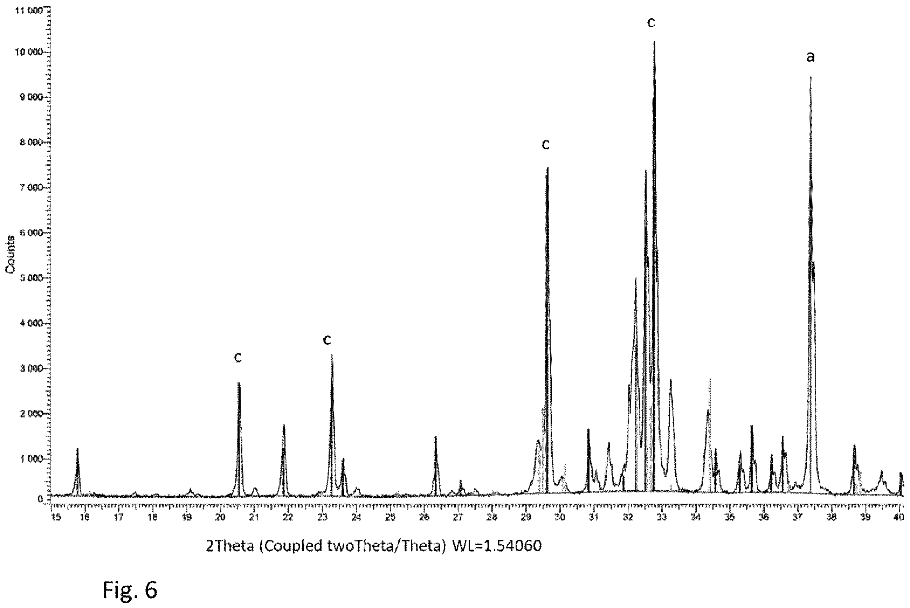

Fig. 6 shows X-ray diffraction analysis of a mixture of 0.25 mol% silicon and 99.75 mol% calcium carbonate (CaCO₃) heat treated at 1400 °C in 90:10 vol% CO₂:N₂ gas atmosphere. The products formed were: CaSiO₄, CaSiOs (c) and CaO (a) (lime). No SiC was detected.

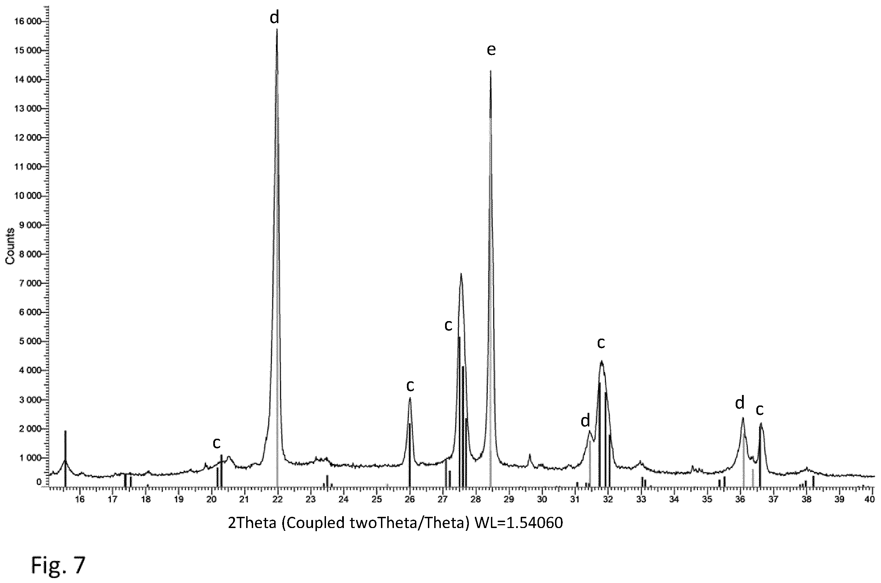

Fig. 7 shows X-ray diffraction analysis of sample 5 mol% silicon and 95 mol% calcium carbonate (CaCO₃) heat treated at 1400 °C in 90:10 vol% CO₂:N₂ gas atmosphere.

The products formed were: SiO₂ (d), CaSiOs (c) and unreacted Si (e). No SiC was detected.

It could be concluded form these experiments, that silicon reacts with CaO to form various types of calcium silicides (e.g. CaSiOs) when mixed with CaCO₃ and heat treated in the temperature range 1200-1400 °C in gas mixtures ranging from 0-90 vol.% CO₂ (i.e. 100-10 vol.% N₂ gas). No silicon carbide species were detected under these conditions.

### Experiment 2

Silicon powder was heat treated without calcium carbonate (CaCO₃). The experiment series was performed in pure CO₂ gas environment. Silicon powder with two types of particle size was studied.

Heat treatment was performed at 1400 °C for 1 hour (ramp temperature from ambient to set point, 6 °C/min). A tube furnace was flushed with a continuous flow of pure CO₂ gas for 4 hours before treatment. Continuous CO₂ gas flow was maintained throughout the experiment with a 0.2 mbar overpressure (i.e. a gas pressure of 101.345 kPa). The samples were allowed to naturally cool down to room temperature (i.e. ≈ 20 °C) without extra cooling applied (i.e. no quenching was performed).

The two particle sizes that were studied were: a) <50 nm particle size (99,5 % Si) - named "nano Si"; b) < 45 µm particle size (98% Si) - named "micro Si"

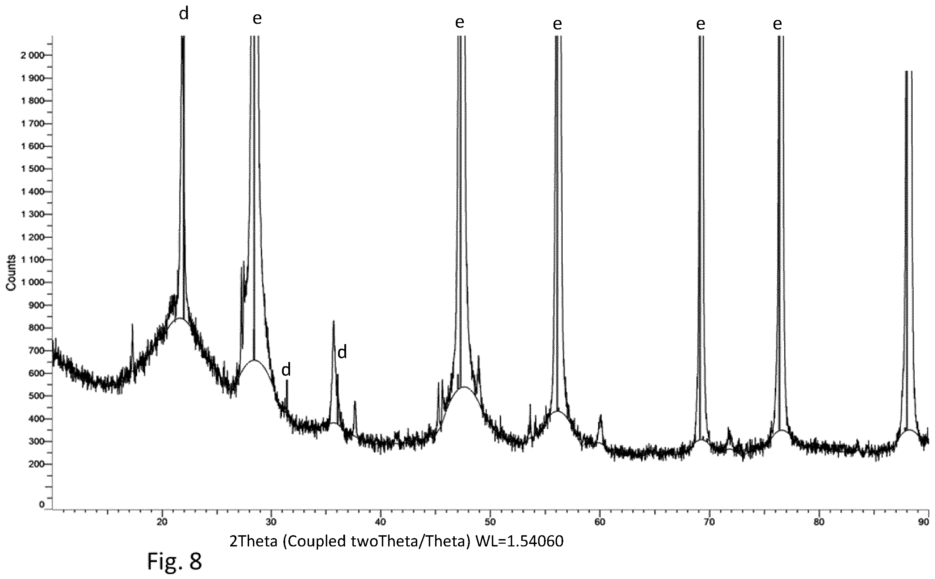

In Fig. 8 X-ray diffraction analysis of micro Si heat treated at 1400 °C in 100 vol.% CO₂ gas atmosphere is shown. The products produced were: SiO₂ (d) and unreacted Si (e).

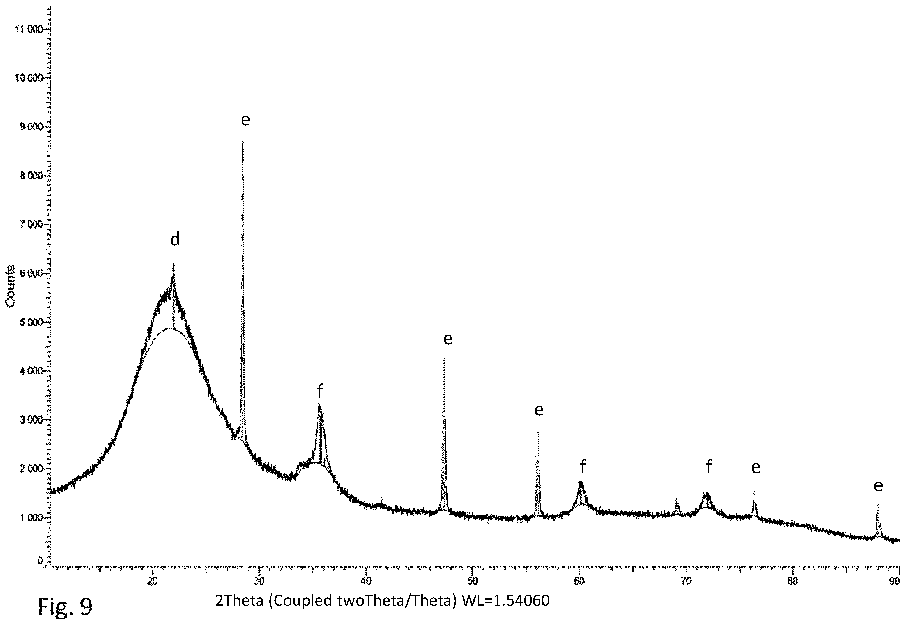

In Fig. 9 shown X-ray diffraction analysis of nano Si heat treated at 1460 °C in 100 vol.% CO₂ gas atmosphere is shown. The products were; SiO₂ (d), SiC (f) and unreacted Si (e).

From these experiments it was concluded that micrometer sized silicon powder (i.e. < 45 µm particle size) does not react with CO₂ at 1400 °C to form silicon carbide (SiC). Silicon instead binds to oxygen to form silicon dioxide (SiO₂) under these conditions. By reducing the particle size to nanometer (i.e. < 50 nm particle size) the reactivity seems to increase as silicon now can bind to carbon to form silicon carbide (SiC). This reaction occurs simultaneously as silicon dioxide is formed. The nanoparticles were heat treated to slightly higher temperatures (1460 °C), but this is unlikely the cause of the difference in SiC formation. SiC formation is more likely enabled by the reduced particle size, as nanoparticles are known to have higher reactivity due to the increased surface area.

### Experiment 3

Nano-sized silicon (<50 nm particle size (99,5 % Si) - named "nano Si") was heat treated in CO₂/Ar atmosphere with CO₂ concentrations ranging from 10-100% at temperatures of 1000-1200°C for 1-12 hours.

In all experiments, powder of nano-sized silicon was pressed into a pellet (about 0.3 g) and placed in a tube furnace. The furnace was flushed with CO₂/Ar gas mixture before heat treatment. During heat treatment, a steady flow of CO₂/Ar gas mixture was supplied (70 Standard cubic centimeters per minute (SCCM) flow rate) in the tube furnace with 100 mbar overpressure (111,325 KPa gas pressure in the container).

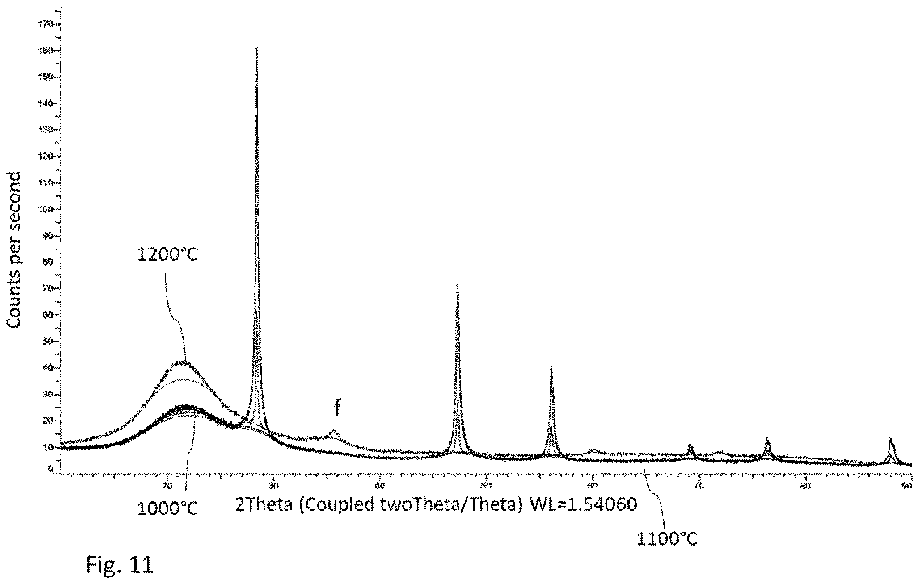

Fig. 11 shows X-ray diffraction analysis of silicon particles of nanometer size heat treated at 1000, 1100 and 1200 °C in 100 vol.% CO₂ gas atmosphere. SiC peaks (f) were only observed at 1200 °C.

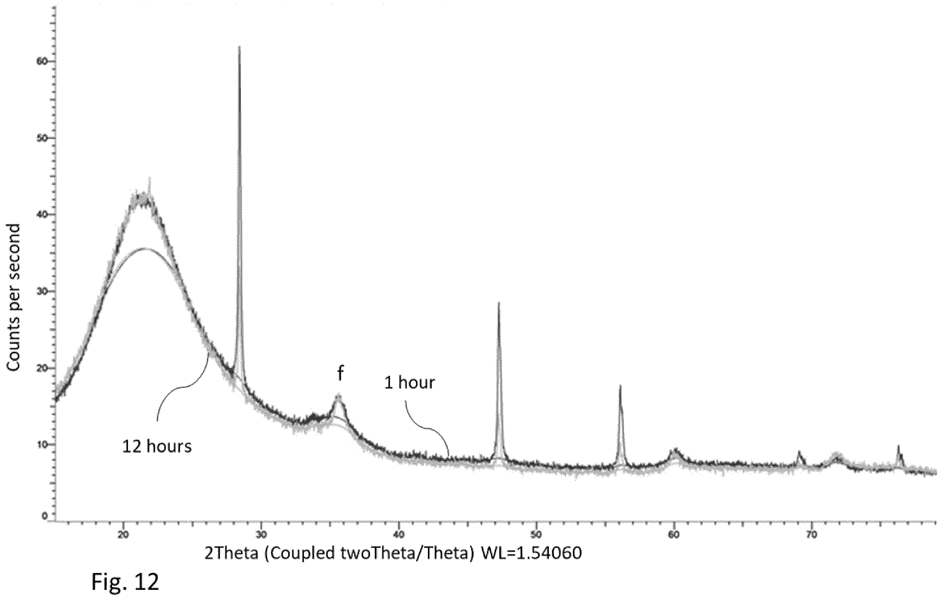

Fig. 12 shows X-ray diffraction analysis of silicon particles of nanometer size heat treated at 1200 °C in 100 vol.% CO₂ gas atmosphere for 1 hour and 12 hours, respectively. SiC peaks (f)) were observed for both time settings.

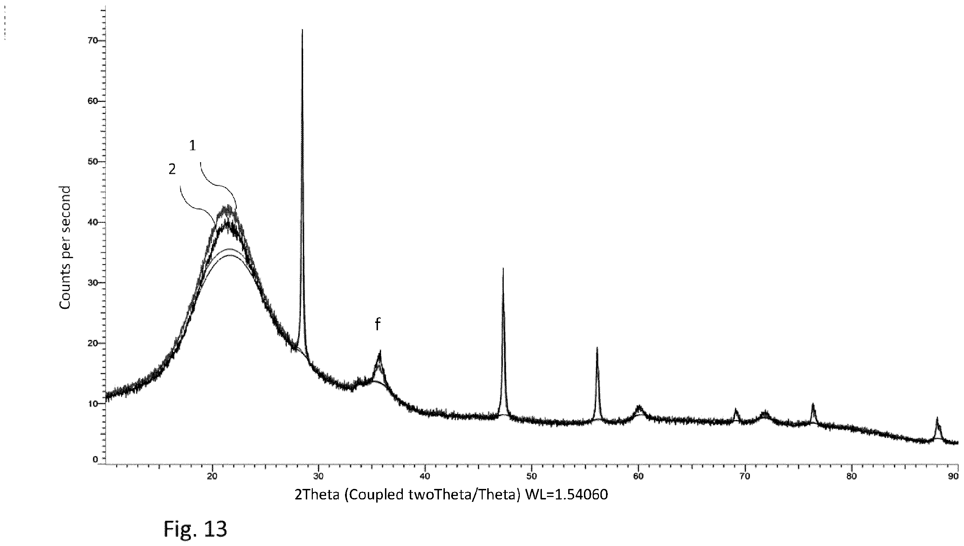

Fig. 13 shows X-ray diffraction analysis of silicon particles of nanometer size heat treated at 1200 °C in 100 vol.% CO₂ gas atmosphere (curve 1) and 30 vol.% CO₂ gas atmosphere (70 vol.% Ar) (curve 2). SiC peaks (f) were observed for both gas mixtures.

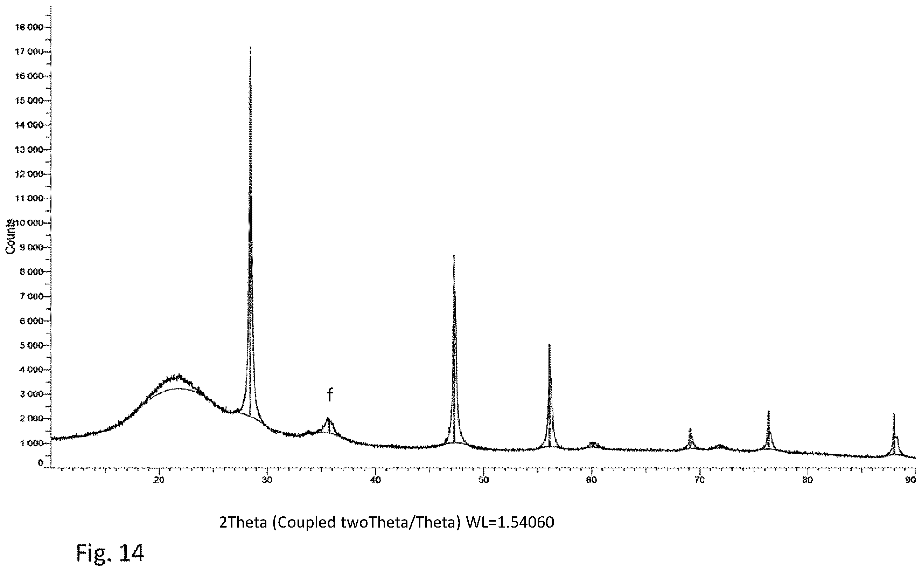

Fig. 14 shows X-ray diffraction analysis of silicon particles of nanometer size heat treated at 1200 °C in 10 vol.% CO₂ gas atmosphere (90 vol.% Ar). SiC peaks (f) were observed for this gas mixture.

From these experiments it was concluded that SiC was formed at 1200 °C and above The SiC XRD peak is then accompanied with a reduced Si peak indicating that Si is reacting with C (from CO₂) to form SiC. Amorphous SiO₂ forms in the entire temperature range and starts to crystallize at 1400 °C. Prolonged heat treatment at 1200 °C (1 h vs 12 h) showed that more SiC is formed with time, indicating that the reaction rate is constant and produces more SiC product the longer the sample is heat treated.

Lowering the amount of CO₂ in the gas mixture (from 100 to 10 vol.%) did not affect the reaction. SiC was formed in the entire gas mixture range.

It was experimentally confirmed that when using solid silicon with a temperature of 1200°C in a gas comprising 100 vol.% argon (Ar), no reaction took place, i.e. no SiC was formed, but as soon as CO₂ is added to the silicon in the container at amounts of at least 1 vol.% SiC is formed in the container.

### Experiment 4

Nano-sized silicon (<50 nm particle size (99,5 % Si) - named "nano Si") was melted in 100 vol% Ar gas atmosphere at 1440 °C and heat treated in 100 vol% CO₂ gas atmosphere at temperature of 1550°C. The original Ar gas atmosphere was changed to 100 vol% CO₂ gas atmosphere while the chamber temperature was heated from 1440 °C to 1550 °C at a rate corresponding to the time it requires to completely replace the gas atmosphere. The sample was then held at 1550 °C for 20 minutes in 100 vol% CO₂ atmosphere.

In all experiments, powder of nano-sized silicon was pressed into a pellet (about 0.3 g) and placed in a tube furnace. The furnace was flushed with Ar gas mixture before heat treatment. During heat treatment, a steady flow of CO₂/Ar gas mixture was supplied (70 Standard cubic centimeters per minute (SCCM) flow rate) in the tube furnace with 100 mbar overpressure (111.325 kPa gas pressure in the container).

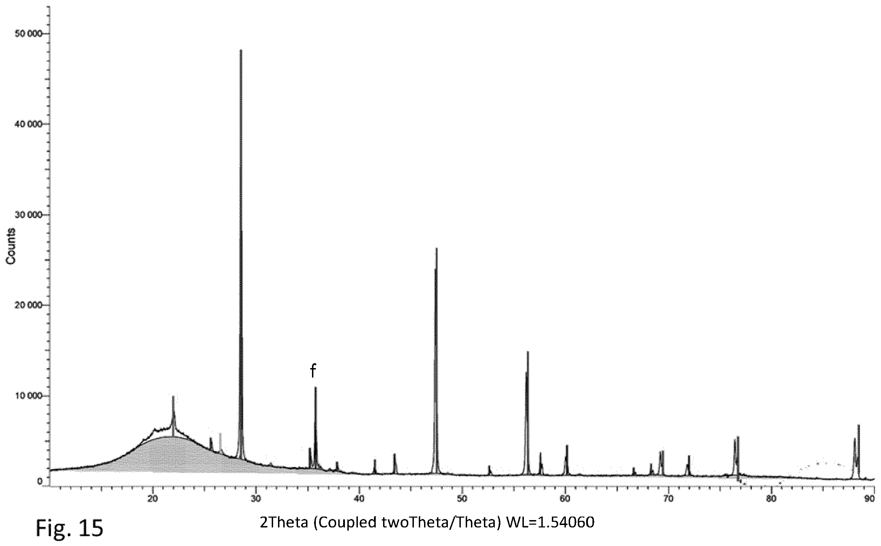

Fig. 15 shows X-ray diffraction analysis of silicon particles of nanometer size heat treated at 1550 °C in 100 vol% CO₂ gas atmosphere. SiC peaks (f) were observed for the melted silicon sample after being exposed to the 100 vol% CO₂ gas atmosphere.

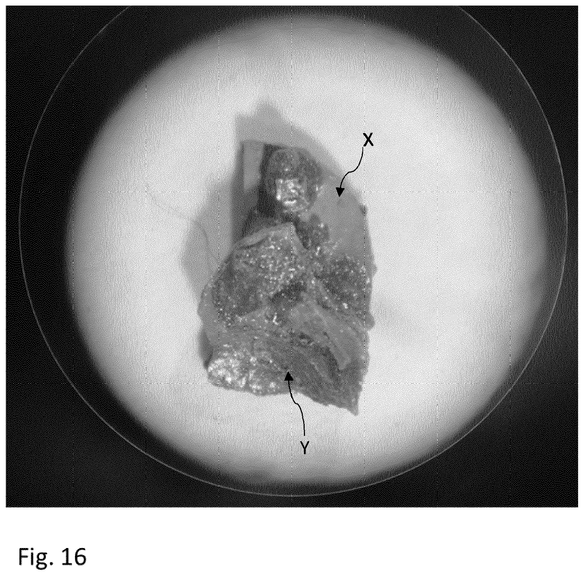

Fig. 16 shows a photo of silicon particles of nanometer size that have partially melted at 1550 °C. Melted silicon (X) and non-melted silicon (Y) samples were separated and the melted silicon sample was analysed by XRD (Fig. 15).

## Claims

1. Process for capturing carbon from gaseous CO₂ (2) and storing the captured carbon in solid form (4a), the process comprising:
providing (100) silicon (5a, 5b, 5c) in a container (6), wherein a temperature of the silicon is or is adjusted to at least 1000 °C,
providing (200) a gas in the container such that a gas pressure of at least 101.335 kPa is created in the container, wherein the gas in the container comprises at least 1 vol. % CO₂ (2), and wherein a mole fraction of CO₂ in the gas is greater than a mole fraction of O₂ in the gas,
allowing (300) the CO₂ (2) to react with the silicon (5a, 5b, 5c) in the container, thereby forming solid silicon carbide (4a).

2. The process of any of the preceding claims, wherein the gas provided in the container comprises 1-100 vol.% CO₂.

3. The process of any of the preceding claims, wherein the gas provided in the container (6) comprises an inert gas.

4. The process of any of the preceding claims, wherein the silicon is solid state silicon (5a).

5. The process of claim 4, wherein the solid state silicon (5a) is provided in the container as particles having a size of 20 µm or less.

6. The process of any of claims 1-3, wherein the silicon is liquid state silicon and the temperature of the silicon is or is adjusted to at least 1400 °C.

7. The process of any of the preceding claims, wherein the silicon (5a, 5b) provided in the container has a purity of at least 45%.

8. The process of any of claims 1-3, wherein the silicon is gaseous state silicon and the temperature of the gaseous state silicon is or is adjusted to at least 1100 °C.

9. The process of any of the preceding claims, wherein the gas provided in the container (6) comprises at most 10 vol.% nitrogen gas (N₂).

10. The process of any of the preceding claims, wherein a catalyst is present in the container (6).

11. System (1) configured for performing the process of any of claims 1-10, the system comprising:
a container (6) arranged to receive silicon (5a, 5b, 5c);
at least one gas inlet (7) arranged for transportation of CO₂ (2) into the container (6) such that a gas pressure of at least 101.335 kPa is created in the container, and
a heater arranged to adjust the temperature in the container (6).
